# EUROPÄISCHE PATENTSCHRIFT

(11) **EP 4 092 193 B1**
(45) Veröffentlichungstag und Bekanntmachung des Hinweises auf die Patenterteilung: **10.04.2024**
(21) Anmeldenummer: 22173179.7
(22) Anmeldetag: 13.05.2022
(51) Int. Cl.: E01H 1/14, E01C 1/00, E01F 9/518

(54) **VERFAHREN UND VORRICHTUNG ZUR SAMMLUNG VON REIFENABRIEB**
METHOD AND DEVICE FOR COLLECTING TYRE DEBRIS
PROCÉDÉ ET DISPOSITIF DE COLLECTE DE DÉBRIS DE PNEUMATIQUES

(30) Priorität: 21.05.2021 CH 5782021
(43) Veröffentlichungstag der Anmeldung: 23.11.2022
(73) Patentinhaber: Ost - Ostschweizer Fachhochschule, 8640 Rapperswil (CH)
(72) Erfinder: BUNGE, Rainer, 8849 Alpthal (CH)
(74) Vertreter: Piticco, Lorena

(56) Entgegenhaltungen:
- CN-A- 111 622 162
- KR-B1- 102 131 061
- US-A1- 2019 031 076
- KNIGHT LYDIA J ET AL: "Tyre wear particles: an abundant yet widely unreported microplastic?", ENVIRONMENTAL SCIENCE AND POLLUTION RESEARCH, ECOMED, LANDSBERG, DE, Bd. 27, Nr. 15, 17. März 2020 (2020-03-17) , Seiten 18345-18354, XP037132802, ISSN: 0944-1344, DOI: 10.1007/S11356-020-08187-4 [gefunden am 2020-03-17]

## Beschreibung

### TECHNISCHES GEBIET

Die vorliegende Erfindung betrifft ein Verfahren zur Sammlung von Reifenabrieb gemäss Anspruch 1, eine Sammlungsvorrichtung zur Sammlung von Reifenabrieb gemäss Anspruch 14, sowie eine Verwendung einer Sammlungsvorrichtung zur Sammlung von Reifenabrieb gemäss Anspruch 15.

### STAND DER TECHNIK

Reifenabrieb ist in vielen Ländern die weitaus wichtigste Quelle für den Eintrag von Mikroplastik in die Umwelt. Besonders schädlich ist dieses Mikroplastik aus drei Gründen. Erstens enthält es schädliche Schwermetalle, z.B. Zink. Zweitens hat es eine sehr kleine Korngrösse, sodass es von Organismen leicht aufgenommen werden kann. Drittens hat Reifenabrieb eine extrem grosse spezifische Oberfläche, welche andere Schadstoffe adsorbieren kann, insbesondere hydrophobe Organika wie PAK aus teerhaltigen Strassenbelägen. Typischer Strassenstaub enthält etwa 0.5% bis 5% Reifenabrieb.

Aus der US 2005/000197 A1 ist eine an einem Fahrzeug befestigte Sammlungsvorrichtung bekannt, die ganz allgemein zur Entfernung von "Kohlenwasserstoffen und anderen Schadstoffen von der Strassenoberfläche" dienen soll. Aus der US 2015/321134 A1 ist eine Sammlungsvorrichtung bekannt, welche im Ansaugstrom eines Luftfilters eines Fahrzeugs installiert ist. Nachteilig bei diesen Dokumenten ist, dass die Sammlung der Partikel unselektiv erfolgt. Das Ziel ist nicht die Sammlung von Reifenabrieb, sondern nach Möglichkeit die Sammlung von allen Partikeln. Da hierbei auch die für die Umwelt wenig relevanten mineralischen Partikel abgeschieden werden, wird eine sehr viel grössere Menge an schadstoffhaltigem Material abgeschieden als umwelttechnisch erforderlich. Die WO 2020/200761 A1 offenbart eine Vorrichtung zur Sammlung von Reifenabrieb bei der die Lauffläche des Reifens "künstlich" mit einem magnetisierbaren Material dotiert wurde, sodass der magnetisierbare Reifenabrieb durch einen in der Umgebung des Reifens angeordneten Magneten abgeschieden werden kann. Nachteilig ist hierbei, dass die Vorrichtung nur mit Reifen funktioniert, die mittels Zumischung von magnetischen Partikeln in die Reifenmatrix präpariert wurden. Ein weiterer Nachteil der Lösungen aus dem Stand der Technik liegt darin, dass eine Sammlung einzig an Orten erfolgt, an denen sich das Fahrzeug umfassend die Sammlungsvorrichtung aufgehalten hat.

CN 111 622 162 A offenbart eine Fahrbahnreinigungsvorrichtung umfassend eine Magnetplatte, die unter einer Strassenoberfläche vertikal verschiebbar angeordnet ist und von vorbeifahrenden Autos aufgrund einer magnetischen Anziehungskraft verschoben wird. Weiter umfasst die Vorrichtung ein Gitter, durch welches Strassenstaub dabei in die Vorrichtung eingesogen wird und dort in eine Abscheidekammer gelangt.

US 2019/031076 A1 offenbart eine Fahrzeugsteuerung basierend auf einer magnetischen Markierung auf einer Strasse. Ein Erkennungssignal der magnetischen Markierung wird von einem Magnetsensor an einem Fahrzeug erfasst und von einem Steuergerät verwendet, um z.B. eine automatische Lenksteuerung, ein Halten der Spur, etc. zu bewirken.

### DARSTELLUNG DER ERFINDUNG

Es ist eine Aufgabe der vorliegenden Erfindung, die Nachteile aus dem Stand der Technik zu überwinden. Insbesondere soll ein Verfahren zur Sammlung von Reifenabrieb angegeben werden, welches vielseitig einsetzbar ist.

Diese Aufgabe wird gelöst durch ein Verfahren gemäss Anspruch 1. So wird ein Verfahren zur Sammlung von Reifenabrieb angegeben, welches die Schritte umfasst von i) Bereitstellen von mindestens einer Sammlungsvorrichtung, und ii) Sammeln von Reifenabrieb an der Sammlungsvorrichtung. Die Sammlungsvorrichtung ist magnetisch anziehend und der Reifenabrieb ist magnetisch anziehbar. Das heisst, zwischen dem Reifenabrieb und der Sammlungsvorrichtung wirkt eine magnetisch anziehende Kraft, welche den Reifenabrieb zur Sammlungsvorrichtung zieht. Nochmals anders gesagt wird hier unter "magnetisch anziehbar" und "magnetisch anziehend" verstanden, dass der magnetisch anziehbare Reifenabrieb von der magnetisch anziehenden Sammlungsvorrichtung aufgrund der magnetischen Anziehungskraft angezogen wird. Die Sammlungsvorrichtung ist nicht fahrzeuggebunden. Oder anders gesagt ist die Sammlungsvorrichtung an keinem Fahrzeug wie z.B. an einem Auto angeordnet. Anders als im Stand der Technik wird der Reifenabrieb daher nicht nur an Orten gesammelt, an denen sich das Fahrzeug befindet. Das erfindungsgemässe Verfahren ist daher vielseitiger einsetzbar und gestattet eine weitläufige oder flächendeckende Sammlung von Reifenabrieb.

Im Stand der Technik wird "magnetisch anziehend" oftmals als Synonym für "magnetisiert" verwendet und bezeichnet einen Magneten. "Magnetisch anziehbar" ist ein Stoff, der entweder magnetisierbar ist oder magnetisiert ist. Die Gruppe der "magnetisch anziehenden" Objekte kann also als eine Teilmenge der Gruppe der "magnetisch anziehbaren" Objekte gesehen werden.

Im Rahmen der vorliegenden Anmeldung bezeichnet der Ausdruck "magnetisch anziehend" die Eigenschaft, eine magnetische Anziehungskraft auszuüben. Diese magnetische Anziehungskraft wird hier vorzugsweise bereitgestellt durch eine magnetisierte Sammlungsvorrichtung und/oder durch eine magnetisierbare Sammlungsvorrichtung. Eine magnetische Sammlungsvorrichtung ist dazu ausgebildet, eine magnetische Anziehungskraft auszuüben. Eine magnetisierbare Sammlungsvorrichtung ist dazu ausgebildet, beispielsweise durch Anlegen eines externen Magnetfeldes magnetisiert zu werden. Der Ausdruck "magnetisch anziehbar" bezeichnet die Eigenschaft, von einer magnetischen Anziehungskraft angezogen zu werden. Diese magnetische Anziehbarkeit wird hier vorzugsweise bereitgestellt durch einen magnetisierbaren Reifenabrieb und/oder durch einen magnetisierten Reifenabrieb. Ein magnetisch anziehbarer Reifenabrieb ist dazu ausgebildet, von einer magnetischen Anziehungskraft angezogen zu werden. Ein magnetisierbarer Reifenabrieb ist dazu ausgebildet, beispielsweise durch Anlegen eines externen Magnetfeldes magnetisch zu werden. Ein solcher Reifenabrieb ist zudem ein magnetisierter Reifenabrieb.

Der Reifenabrieb wird vorzugsweise aus Strassenstaub abgeschieden und/oder der Reifenabrieb ist vorzugsweise sekundärer Reifenabrieb. Beim Strassenstaub handelt es sich insbesondere um ein Materialgemisch mit einem Durchmesser von weniger als einem Millimeter, wie es typischerweise auf der Strasse liegt. Wichtige Bestandteile hiervon sind mineralische Anteile, Asphalt, Rost und eben Reifenabrieb. Der Reifenabrieb umfasst vorzugsweise einen Durchmesser im Bereich von 10 Mikrometer bis 1000 Mikrometer, insbesondere im Bereich von 50 bis 500 Mikrometer. Der Reifenabrieb ist vorzugsweise partikelförmig. Zusätzlich oder alternativ dazu ist der Reifenabrieb vorzugsweise natürlicher und/oder unbehandelter Reifenabrieb. Das heisst, und im Gegensatz zur Lösung gemäss WO 2020/200761 A1, ist keine Dotierung des Reifen-Matrixmaterials mit magnetisierbarem Material nötig. Stattdessen kann das Verfahren mit jeglichen Reifen durchgeführt werden.

Überraschend wurde von den Erfindern nämlich entdeckt, dass zwar das primäre Reifenmaterial nicht magnetisch ist, jedoch der auf der Strasse befindliche sogenannte sekundäre Reifenabrieb magnetisch anziehbar ist. Der primäre Reifenabrieb entsteht unmittelbar am Reifen und besteht aus weitgehend reinem Reifenmaterial. Der sekundäre Reifenabrieb ist der Reifenabrieb, wie er beispielsweise auf der Strasse liegend angetroffen wird. Weiter haben Untersuchungen gezeigt, dass der im Strassenstaub enthaltene sekundäre Reifenabrieb nicht, wie man erwarten sollte, aus kleinen, im Wesentlichen frei vorliegenden, Reifenpartikeln besteht. Vielmehr liegt der sekundäre Reifenabrieb in Form von kleinen oftmals zylindrischen Körpern vor, welche typischerweise einen Durchmesser zwischen 10 und 1000 Mikrometer aufweisen. Eingewalzt in diese Körper sind bemerkenswert grosse Mengen an Fremdstoffen. Hierbei handelt es sich um magnetisch anziehbares Material wie z.B. magnetisch anziehbares mineralisches Material, aber auch um Schwermetalle, insbesondere Eisen, Zink und Kupfer. Das Eisen liegt überwiegend in oxydischer Form vor, viel davon als Magnetit. Diese Eisenoxide sind zum Teil abgeblätterte Korrosionsprodukte von Eisenteilen an Fahrzeugen ("Rost"). Ein weiterer Teil des Eisens, sowie der überwiegende Teil des Kupfers und ein Teil des Zinks, stammt aus dem Abrieb von Bremsscheiben. Anschaulich kann man sich den auf der Strasse befindlichen sekundären Reifenabrieb etwa so vorstellen wie die zylindrischen "wurstförmigen" Körper, die durch den Abrieb eines Radiergummis entstehen. Ebenso wie im Abrieb von Radiergummis die Graphitfragmente von Bleistiften eingewalzt werden, wird im sekundären Reifenabrieb Strassenstaub eingerollt, der in der Regel auch magnetische Partikel beinhaltet.

Die Sammlungsvorrichtung ist vorzugsweise ortsfest oder nicht-ortsfest. Eine ortsfeste Sammlungsvorrichtung ist insbesondere unverschiebbar und/oder unbeweglich angeordnet, wobei der Reifenabrieb, vorzugsweise enthalten in Strassenstaub, der Sammlungsvorrichtung beispielsweise durch eine Luftbewegung oder durch Regenwasser zugeführt wird. Eine nicht-ortsfeste Sammlungsvorrichtung ist vorzugsweise verschiebbar und/oder beweglich angeordnet.

Die Sammlungsvorrichtung kann auf und/oder in einer Fahrbahn, insbesondere einem Fahrbahnbelag, unverschiebbar oder verschiebbar angeordnet werden. Vorzugsweise wird eine verschiebbar angeordnete Sammlungsvorrichtung auf einer Fahrbahn und/oder einem Fahrbahnbelag ausgestreut. Zusätzlich oder alternativ dazu kann die Sammlungsvorrichtung im Bereich einer Fahrbahn, insbesondere in einer Strassenabwasserbehandlungsanlage und/oder einer Leitplanke und/oder einer Sickerschicht und/oder einer Befestigungsvorrichtung, unverschiebbar oder verschiebbar angeordnet werden. Eine verschiebbar angeordnete Sammlungsvorrichtung wird wiederum vorzugsweise im Bereich einer Fahrbahn wie in der Strassenabwasserbehandlungsanlage oder auf der Sickerschicht ausgestreut. Die Befestigungsvorrichtung ist vorzugsweise zur Befestigung der Sammlungsvorrichtung ausgebildet und kann beispielsweise ein Netz oder dergleichen sein, an welcher die Sammlungsvorrichtung lösbar oder unlösbar befestigt ist, und welche im Bereich der Fahrbahn wie z.B. am Ort einer Leitplanke installiert ist. Das heisst, die Sammlungsvorrichtung kann auch neben einer Strasse installiert werden, z.B. in Form eines mit Magneten versehenen Netzes. Der im Laufe eines längeren Zeitraums z.B. mit dem Wind über die Strassenränder hinweg verfrachtete Reifenabrieb bleibt an diesen Netzen hängen und dringt daher nicht in den Boden ein.

Eine ortsfeste oder unverschiebbar auf und/oder in einer Fahrbahn beziehungsweise im Bereich einer Fahrbahn angeordnete Sammlungsvorrichtung kann auch als strassenstationäre Sammlungsvorrichtung bezeichnet werden.

Eine nicht-ortsfeste oder verschiebbar auf und/oder im Bereich einer Fahrbahn angeordnete Sammlungsvorrichtung könnte aus einer Vielzahl von Magneten bestehen, die auf der Strasse oder im Bereich der Strasse ausgestreut werden. Der Reifenabrieb bleibt vorzugsweise an diesen Magneten haften und bilden insbesondere bevorzugt grössere Agglomerate, die vor Verfrachtung in die Umwelt durch Wind und Wasser geschützt sind und z.B. in Entwässerungsschächten gesammelt werden und/oder durch die Strassenreinigung beseitigt werden.

Die Sammlungsvorrichtung umfasst Partikel oder besteht vorzugsweise aus Partikeln, insbesondere magnetisierte Partikel und insbesondere bevorzugt Ferrit, beispielsweise Strontiumferrit, und/oder Magnetit. Ein Durchmesser der Partikel liegt vorzugsweise in einem Bereich von 0.1 Millimeter bis 10 Millimeter, bevorzugter in einem Bereich von 0.5 Millimeter bis 5 Millimeter. Zusätzlich oder alternativ dazu ist die Sammlungsvorrichtung vorzugsweise magnetisch und/oder magnetisierbar und/oder magnetisiert und ist insbesondere bevorzugt ein Permanentmagnet.

Beispielsweise kann es sich bei der Sammlungsvorrichtung in Form eines Permanentmagneten um einen Rohrabscheider und/oder einen Matrixabscheider und/oder einen Stababscheider handeln, wie er allgemein bekannt und kommerziell erhältlich ist. Permanentmagnete aus den unterschiedlichsten Materialien sind dabei denkbar. Als Beispiel sei hier Neodym oder eine Neodym-Legierung wie zum Beispiel Neodym-Eisen-Bor genannt. Alternativ kommen auch Ferrite, magnetisierte Stähle, etc., in Frage.

In einer bevorzugten Ausführungsform besteht die nicht-ortsfeste Sammlungsvorrichtung aus Ferritsand und/oder Magnetitsand, der auf die Strasse aufgestreut wird, oder lose an die Strassenoberfläche gebunden wird. Der Ferritsand und/oder Magnetitsand wird durch die Fahrzeuge, durch Kehrmaschinen, sowie durch Wind und Wasser, über die Strassenoberfläche bewegt und sammelt den Reifenabrieb ein. Die durch den Ferritsand und/oder Magnetitsand gebildeten Magnete und der anhaftende Reifenabrieb können z.B. periodisch von der Strassenreinigung erfasst werden. Eine weitere Möglichkeit besteht darin die Magnete und den anhaftenden Reifenabrieb aus dem Strassenabwasser, von dem sie mitgerissen werden, abzuscheiden, siehe auch Erläuterungen weiter unten. Ebenso wie oben für die Netze ausgeführt, können ortsfeste Sammlungsvorrichtungen auch im Bereich einer Fahrbahn wie neben der Strasse installiert werden, z.B. in Form von Ferritsand und/oder Magnetitsand als oberer Teil einer Sickerschicht. Der Reifenabrieb bleibt an diesen Sandpartikeln hängen. Periodisch, z.B. alle zwei Jahre, könnte die Sickerschicht ausgebaut, vom Reifenabrieb abgereinigt, und wieder eingebaut werden.

Die Sammlungsvorrichtung kann mindestens ein Bindemittel und darin eingelagerte magnetisierte Partikel umfassen. Das Bindemittel ist insbesondere ein Anstrich und/oder Beton und/oder Asphalt und/oder ist darin enthalten. Beispielsweise kann die Sammlungsvorrichtung in Form des Anstrichs als magnetische Beschichtung vorliegen, die auf dem Strassenbelag angebracht wird. Der Anstrich kann eine Farbe sein, in welche Magnetpartikel eingelagert sind, und mit welcher der Fahrbahnrand markiert ist, z.B. in Form der seitlichen Begrenzungsstreifen oder Seitenstreifenmarkierung. Das heisst, die Sammlungsvorrichtung kann als magnetische Farbe bereitgestellt werden. Diese magnetische Farbe könnte den Begrenzungsstreifen bzw. Seitenstreifenmarkierung bilden. Dieser Streifen wird vom Regenwasser überspült. Der mitgerissene Reifenabrieb wird alsdann durch die vom Anstrich ausgeübte magnetische Anziehungskraft auf dem Streifen fixiert. Auch Reifenabrieb der durch Wind über die Strasse getrieben wird, z.B. durch den Fahrtwind von Fahrzeugen, bleibt an dem Anstrich hängen. Wie nachfolgend noch eingehender erörtert wird, kann der am Anstrich gesammelte Reifenabrieb periodisch, z.B. im Zuge der Strassenreinigung, abgeführt werden. Andere Ausgestaltungen sind natürlich genauso denkbar. Ein anderes Beispiel ist eine "magnetischen Leitplanke", wobei die Leitplanke vorzugsweise an ihren strassenseitigen vertikalen Flächen und/oder an ihrer Unterseite mit einem solchen Anstrich beschichtet ist. Eine solche Leitplane verhindert, dass aufgewirbelter sekundärer Reifenabrieb von der Strasse in die Umwelt ausgetragen wird. In analoger Weise können Teilflächen der Strasse, z.B. die Seitenstreifen oder Bordsteine, mit magnetischen Anstrichen oder Beschichtungen ausgestattet werden. In ähnlicher Weise kann magnetischer Beton und/oder magnetischer Asphalt bereitgestellt werden, wobei beispielsweise magnetisch anziehbare Partikel in eine Oberfläche von Beton oder Asphalt eingelagert werden. Als ein Beispiel sei hier ein kanalförmiges Betonelement genannt, welches in eine seitliche Abflussrinne am Strassenrand eingebaut wird, und dessen Oberfläche eingelagerte permanentmagnetische Partikel umfasst. Während die mit dem Wasser durch den Betonkanal gespülten unmagnetischen Partikel fortgespült werden, wird der magnetisch anziehbare Reifenabrieb zurückgehalten und kann periodisch mittels Strassenkehrmaschinen eingesammelt und entsorgt werden.

Die magnetisierten Partikel werden vorzugsweise unmagnetisiert dem Bindemittel zugeführt und werden nach einer Anordnung des Bindemittels umfassend die unmagnetisierten Partikel auf und/oder in einer Fahrbahn und/oder im Bereich einer Fahrbahn insbesondere durch Anlegen eines externen Magnetfeldes magnetisiert. So würden magnetisierbare Partikel durch die magnetische Anziehung zusammenkleben, wenn sie in magnetisierter Form in das Bindemittel eingerührt werden. Daher ist es von Vorteil, die Partikel unmagnetisiert in das Bindemittel einzuführen, anschliessend das Bindemittel auf der Strasse zu applizieren, und schlussendlich die Partikel zum Beispiel durch Anlegen eines externen Magnetfeldes zu magnetisieren.

Die Sammlungsvorrichtung weist an einer Oberfläche der Sammlungsvorrichtung eine effektive Feldstärke von mindestens 30 mT oder mehr, vorzugsweise von mindestens 100 mT oder mehr auf. Zusätzlich dazu kann die Sammlungsvorrichtung insbesondere an einer Oberfläche der Sammlungsvorrichtung vorzugsweise eine effektive Feldstärke von 500 mT oder weniger, vorzugsweise von 300 mT oder weniger aufweisen.

Der Reifenabrieb wird vorzugsweise selektiv gesammelt. "Selektiv" bedeutet, dass der Reifenabrieb separat von, beziehungsweise bevorzugt vor, anderen nicht magnetisierbaren oder magnetisierten Partikeln durch die Sammlung erfasst wird, insbesondere bevorzugt vor mineralischen oder organischen Partikeln. Eine Konzentration vom abgeschiedenen Reifenabrieb ist vorzugsweise mindestens 20 %, insbesondere mindestens 50 % höher als eine Konzentration vom Reifenabrieb im Strassenstaub.

Die Sammlungsvorrichtung ist vorzugsweise derart ausgebildet, dass nicht magnetisch anziehbare Partikel durch die Schwerkraft aus einem Wirkungsbereich der Sammlungsvorrichtung abgeführt werden. Das heisst, die Sammlungsvorrichtung ist vorzugsweise derart ausgebildet, dass der magnetisch anziehbare Reifenabrieb beispielsweise an einer magnetisch beschichteten Fläche der Sammlungsvorrichtung hängen bleibt, während unmagnetische Partikel von dieser Fläche herunterfallen. Weiter ist es bevorzugt, dass die Sammlungsvorrichtung derart ausgebildet ist, dass, wenn sich eine grössere Menge an magnetisch anziehbarem Reifenabrieb angesammelt hat, sich ein Agglomerat oder eine "Traube" an Reifenabrieb ausbildet, das bzw. die unter dem Eigengewicht, z.B. bei Regenereignissen, periodisch herunterfällt und beispielsweise in dafür vorgesehenen Rinnen gesammelt und/oder von der Strassenreinigung periodisch entsorgt wird.

Die Sammlungsvorrichtung wird vorzugsweise an einem Ort aufweisend einen erhöhten Reibungsabrieb bereitgestellt. Die Sammlungsvorrichtung kann insbesondere an einem Ort bereitgestellt werden, wo Fahrzeuge abbremsen und/oder beschleunigen und/oder Scherkräfte auf Reifen der Fahrzeuge erzeugen. Vorzugsweise wird die Sammlungsvorrichtung im Bereich von Lichtzeichenanlagen und/oder Stoppschildern und/oder Kurven bereitgestellt. Das heisst, die Sammlungsvorrichtung wird vorzugsweise dort bereitgestellt, wo der Reifenabrieb besonders stark ist, insbesondere überall dort, wo Fahrzeuge bis zum Stillstand abbremsen und/oder aus dem Stillstand beschleunigen (Lichtzeichenanlagen, Stoppschilder...). Zusätzlich auch dort, wo starke Scherkräfte auf die Reifen wirken, z.B. in scharfen Kurven.

Wie früher bereits erwähnt, wird der Reifenabrieb vorzugsweise durch mindestens ein Fluid, insbesondere durch Luftbewegung und/oder durch Wasser, vorzugsweise Regenwasser, zur Sammlungsvorrichtung geführt.

Das Verfahren umfasst vorzugsweise weiter das Bereitstellen von mindestens einer Verstärkungsvorrichtung, wobei die Verstärkungsvorrichtung dazu ausgebildet ist, eine magnetische Anziehbarkeit des Reifenabriebs zu verstärken.

Die Verstärkungsvorrichtung umfasst oder besteht aus magnetisch anziehbarem Material, vorzugsweise aus magnetisierbarem Material, insbesondere aus Ferrosiliziumstaub. Die Verstärkungsvorrichtung ist vorzugsweise partikelförmig und umfasst oder besteht insbesondere aus Partikeln aufweisend einen Durchmesser in einem Bereich von 0.005 Millimeter bis 4 Millimeter, bevorzugter in einem Bereich von 0.01 Millimeter bis 2 Millimeter. Insbesondere bevorzugt umfasst oder besteht die Verstärkungsvorrichtung aus magnetisierbaren Partikeln und mindestens einem Bindemittel, wobei die magnetisierbaren Partikel im Bindemittel eingelagert sind. Das Bindemittel ist insbesondere ein Kunstharz und/oder Zement und/oder Bitumen beziehungsweise das Bindemittel wird insbesondere durch einen Anstrich und/oder Beton und/oder Asphaltbelag umfassend das Bindemittel bereitgestellt.

Die Verstärkungsvorrichtung ist vorzugsweise nicht-fahrzeuggebunden und ist insbesondere ortsfest oder nicht-ortsfest. Die Verstärkungsvorrichtung, beispielsweise das Bindemittel umfassend die magnetisierbaren Partikel, wird vorzugsweise in und/oder auf einer Fahrbahn, insbesondere einem Fahrbahnbelag, bereitgestellt. Insbesondere bevorzugt wird die Verstärkungsvorrichtung im Bereich und/oder in Kontakt mit der Sammlungsvorrichtung bereitgestellt. Dieser Bereich der Sammlungsvorrichtung ist vorzugsweise ein Wirkbereich der Sammlungsvorrichtung, also ein Bereich, innerhalb welchem die Sammlungsvorrichtung eine magnetische Anziehungskraft ausübt. Das heisst, um den Reifenabrieb besonders stark magnetisch anziehend zu machen, kann vorzugsweise im Wirkbereich der Sammlungsvorrichtung eine Verstärkungsvorrichtung wie z.B. eine Strassendeckschicht eingebaut werden, in welche magnetisch anziehbares Material, insbesondere magnetisierbares Material z.B. in Form von Ferrosiliziumstaub, eingelagert ist. Weiter ist die Verstärkungsvorrichtung vorzugsweise für eine Einbettung in den Reifenabrieb, insbesondere in sich bildende Partikel aus Reifenabrieb, ausgebildet. Die Verstärkungsvorrichtung ist vorzugsweise dazu ausgebildet, bei einer Befahrung von einem Fahrzeug einen vorzugsweise magnetisch anziehbaren Fahrbahnabrieb zu bilden. Die Verstärkungsvorrichtung wird analog zur Sammlungsvorrichtung vorzugsweise ebenfalls an einem Ort aufweisend einen erhöhten Reibungsabrieb bereitgestellt. Nämlich, dort wo eine Strasse besonders stark beansprucht wird, entsteht erstens viel Reifenabrieb und zweitens viel Fahrbahnabrieb. Durch das Vorsehen der Verstärkungsvorrichtung wird der Fahrbahnabrieb magnetisch und kann zusätzlich zu dem sich bereits auf der Strasse befindlichen magnetisch anziehbaren Material wie z.B. Eisenrost in den sich bildenden Reibungsabrieb eingebettet werden. Dadurch entsteht ein Reifenabrieb, insbesondere ein partikelförmiger Reifenabrieb, welcher eine besonders stark ausgeprägte Magnetisierbarkeit aufweist.

Die Verstärkungsvorrichtung kann eine weitere Sammlungsvorrichtung bereitstellen. Oder anders gesagt kann die Verstärkungsvorrichtung eine Doppelfunktion erfüllen, einerseits nämlich zur Verstärkung der magnetischen Anziehbarkeit des Reifenabriebs wie oben dargelegt ausgebildet sein. Andererseits kann die Verstärkungsvorrichtung zusätzlich auch magnetisch anziehend für den magnetisch anziehbaren Reifenabrieb ausgebildet sein. Insbesondere ist die Verstärkungsvorrichtung zusätzlich auch als weitere Sammlungsvorrichtung ausgebildet, wenn sie aus magnetisierten Partikeln besteht. Beispielsweise ist eine Verstärkungsvorrichtung bestehend aus Magnetitsand vorzugsweise zur Verstärkung der magnetischen Anziehbarkeit des Reifenabriebs ausgelegt, wobei der Magnetitsand insbesondere bevorzugt in sich bildende Partikel aus Reifenabrieb eingebettet wird. Eine Verstärkungsvorrichtung aus Magnetitpartikel hingegen ist zur Ausbildung von Agglomerationen aus Partikel aus Reifenabrieb ausgebildet, wodurch diese Verstärkungsvorrichtung ebenfalls als Sammlungsvorrichtung dient. Diese Partikel aus Reifenabrieb können dabei die Verstärkungsvorrichtung z.B. in Form von Magnetitsand enthalten.

Das Verfahren umfasst vorzugsweise weiter das Klassieren des Reifenabriebs basierend auf einer Korngrösse des Reifenabriebs. Insbesondere wird der Reifenabrieb in eine Korngrösse von 2 Millimeter oder weniger, vorzugsweise von 1 Millimeter oder weniger klassiert. Zusätzlich oder alternativ dazu erfolgt das Klassieren vorzugsweise vor einer Zuführung des Reifabriebs zur Sammlungsvorrichtung.

Das heisst, es ist bevorzugt den Reifenabrieb zunächst einer Korngrössentrennung zu unterziehen, und diesen getrennten oder klassierten Reifenabrieb alsdann der Sammlungsvorrichtung durchzuführen. Die mit der Sammlungsvorrichtung in Kontakt gebrachte Korngrössenfraktion ist dabei vorzugsweise 2 Millimeter oder weniger. Vorzugsweise erfolgt die Klassierung durch eine Klassiervorrichtung wie z.B. ein Sieb oder einen Sedimentationsabscheider, z.B. einen Zyklon, wobei die Klassiervorrichtung vorzugsweise auf einem Transportweg des Reifenabriebes hin zur Sammlungsvorrichtung angeordnet ist.

Wie früher bereits erwähnt umfasst das Verfahren vorzugsweise weiter das Entfernen des an der Sammlungsvorrichtung gesammelten Reifenabriebs. Das Entfernen erfolgt vorzugsweise durch eine Strassenreinigung und/oder durch eine Abreinigung und/oder durch eine Sammlung insbesondere gemeinsam mit der Sammlungsvorrichtung. Eine Sammlung des Reifenabriebs gemeinsam mit der Sammlungsvorrichtung bedeutet, dass sowohl der Reifenabrieb als auch die Sammlungsvorrichtung gesammelt bzw. entfernt werden. Beispielsweise kann der Reifenabrieb auf der Fahrbahn oder strassenabwasserseitig, insbesondere in einer Regenablaufrinne und/oder vor oder hinter einem Schlammsammler ("Strassenschacht") gesammelt werden. Genauso denkbar ist eine Sammlung dort, wo das Strassenabwasser versickert wird, z.B. im Rahmen einer Trennkanalisation. Besonders bevorzugt erfolgt eine gemeinsame Sammlung des Reifenabriebs sowie der Sammlungsvorrichtung im Falle einer nicht-ortsfesten Sammlungsvorrichtung wie z. B. einer ausgestreuten Sammlungsvorrichtung. Beispielsweise kann die Sammlungsvorrichtung in Form von auf dem Strassenbelag ausgestreuten magnetisierten Partikeln ("Permanentmagnetpartikel") vorliegen, die insbesondere dazu geeignet ist den vorzugsweise partikelförmigen Reifenabrieb zu grösseren Agglomeraten zu vereinigen, welche dann nicht mehr ohne weiteres durch den Wind fortgeweht werden können, sondern auf der Strassenoberfläche zu immer grösseren Partikeltrauben agglomerieren, bis sie schliesslich durch die Strassenreinigung erfasst und entfernt werden.

In einem weiteren Aspekt wird eine Sammlungsvorrichtung zur Sammlung von magnetisch anziehbarem Reifenabrieb insbesondere aus Strassenstaub, angegeben. Die Sammlungsvorrichtung ist magnetisch anziehend und nicht fahrzeuggebunden.

Bei der Sammlungsvorrichtung handelt es sich insbesondere um eine Sammlungsvorrichtung wie oben beschrieben. Sämtliche Aussagen betreffend das Verfahren zur Sammlung von Reifenabrieb gelten daher vorzugsweise analog für die Sammlungsvorrichtung per se und umgekehrt.

In einem weiteren Aspekt wird die Verwendung einer Sammlungsvorrichtung zur Sammlung von Reifenabrieb angegeben. Die Sammlungsvorrichtung ist magnetisch anziehend und der Reifenabrieb ist magnetisch anziehbar. Die Sammlungsvorrichtung ist nicht fahrzeuggebunden.

Bei der Sammlungsvorrichtung handelt es sich insbesondere um eine Sammlungsvorrichtung wie oben beschrieben. Sämtliche Aussagen das Verfahren zur Sammlung von Reifenabrieb bzw. der Sammlungsvorrichtung per se gelten daher vorzugsweise analog für die Verwendung der Sammlungsvorrichtung und umgekehrt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine schematische Schnittansicht durch eine Fahrbahn umfassend eine Sammlungsvorrichtung zur Sammlung von Reifenabrieb;
- Fig. 2: zeigt eine schematische Schnittansicht durch eine Fahrbahn umfassend eine weitere Sammlungsvorrichtung und eine Verstärkungsvorrichtung;
- Fig. 3a: zeigt eine perspektivische Ansicht einer Fahrbahn umfassend eine weitere Sammlungsvorrichtung und eine weitere Verstärkungsvorrichtung;
- Fig. 3b: zeigt eine Schnittansicht des Bereichs i in Figur 3a;
- Fig. 4a: zeigt eine perspektivische Ansicht einer Fahrbahn umfassend eine weitere Sammlungsvorrichtung;
- Fig. 4b: zeigt eine Schnittansicht des Bereichs j in Figur 4a;
- Fig. 5: zeigt eine perspektivische Ansicht einer weiteren Sammlungsvorrichtung;
- Fig. 6: zeigt eine perspektivische Ansicht einer weiteren Sammlungsvorrichtung;
- Fig. 7: zeigt eine perspektivische Ansicht einer weiteren Sammlungsvorrichtung.

### BESCHREIBUNG BEVORZUGTER AUSFÜHRUNGSFORMEN

Aspekte des erfindungsgemässen Verfahrens zur Sammlung von Reifenabrieb 3 sowie der erfindungsgemässen Sammlungsvorrichtung 20; 22; 23 werden nun anhand der Figuren eingehender erörtert.

So basiert das Verfahren zur Sammlung von Reifenabrieb 3 darauf, dass mindestens eine Sammlungsvorrichtung 20; 22; 23; 24 bereitgestellt wird, welche magnetisch anziehend ist, und aufgrund ihrer magnetischen Anziehungskraft magnetisch anziehbaren Reifenabrieb 3 anzieht und dadurch sammelt. Sämtliche hier gezeigte Sammlungsvorrichtungen 20; 22; 23; 24 sind nicht fahrzeuggebunden, sind also an keinem Fahrzeug angebracht. Weiter zeigen die Figuren jeweils eine ortsfeste Sammlungsvorrichtung 20; 23; 24. Es gilt zu verstehen, dass nicht-ortsfeste Sammlungsvorrichtungen 22 jedoch genauso denkbar sind.

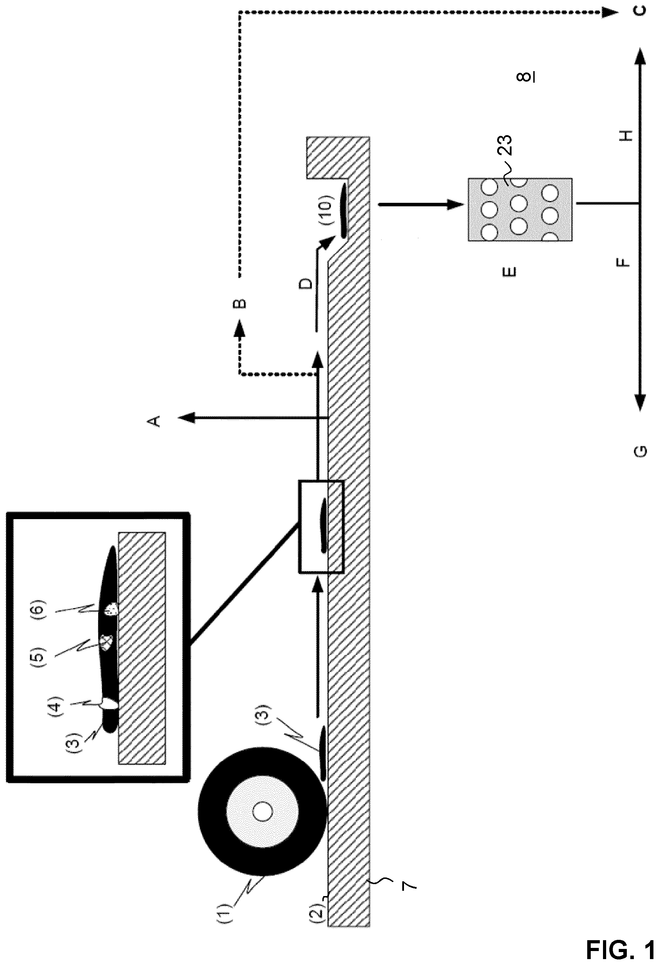

Wie aus Figur 1 hervorgeht, handelt es sich beim magnetisch anziehbaren Reifenabrieb um sekundären Reifenabrieb 3, welcher hier aus primären Reifenabrieb von einem Reifen 1 gebildet wird und in Form von Strassenstaub auf dem Fahrbahnbelag 2 einer Fahrbahn 7 aufliegt. Der in Figur 1 dargestellte sekundäre Reifenabrieb 3, der Einfachheit halber nachfolgend Reifenabrieb 3 genannt, liegt in Form von Partikeln vor und umfasst beispielsweise magnetische Rostpartikel 4, Bremsabrieb 5 aus Messing, sowie Mineralpartikel 6.

Wie durch die Buchstaben A bis H angedeutet wird, bestehen verschiedene Eingriffsmöglichkeiten. Beispielsweise kann der auf dem Fahrbahnbelag 2 angeordnete Reifenabrieb 3 durch eine Strassenreinigung (nicht dargestellt) erfasst werden, siehe A. Weiter kann der Reifenabrieb 3 durch Wind oder Wasser erfasst und von dem Fahrbahnbelag 2 weg und beispielsweise direkt in die Umwelt befördert werden, siehe B und C. Genauso ist es denkbar, dass der Reifenabrieb 3 beispielsweise durch Wasser erfasst und alsdann in einen Wasserabfluss 10 oder eine Regenrinne befördert wird, siehe D. Figur 1 zeigt dabei eine Sammlungsvorrichtung in Form eines Permanentmagneten 23, der in einen Schlammsammler E eingebaut ist, an welchem der Reifenabrieb 3 aus dem Wasserabfluss beim Versickern des Wassers vorbeigeführt wird. Der Permanentmagnet 23 ist dabei unverschiebbar in einer Sickerschicht 8 angeordnet, welche sich im Schlammsammler E befindet. Aufgrund der magnetischen Anziehungskraft des Permanentmagneten 23 wird der magnetisch anziehbare Reifenabrieb 3 vom Permanentmagneten 23 magnetisch angezogen und dadurch am Permanentmagneten 23 gesammelt. Das durch den Permanentmagneten 23 vom Reifenabrieb 3 befreite Wasser wird alsdann aus dem Schlammsammler E herausgeführt und beispielsweise über eine Kanalisation, siehe F, in eine Kläranlage, siehe G, abgeführt. Genauso denkbar ist jedoch, dass dieses befreite oder von Reifenabrieb 3 gereinigte Wasser versickert und dadurch in die Umwelt gelangt, siehe H und C.

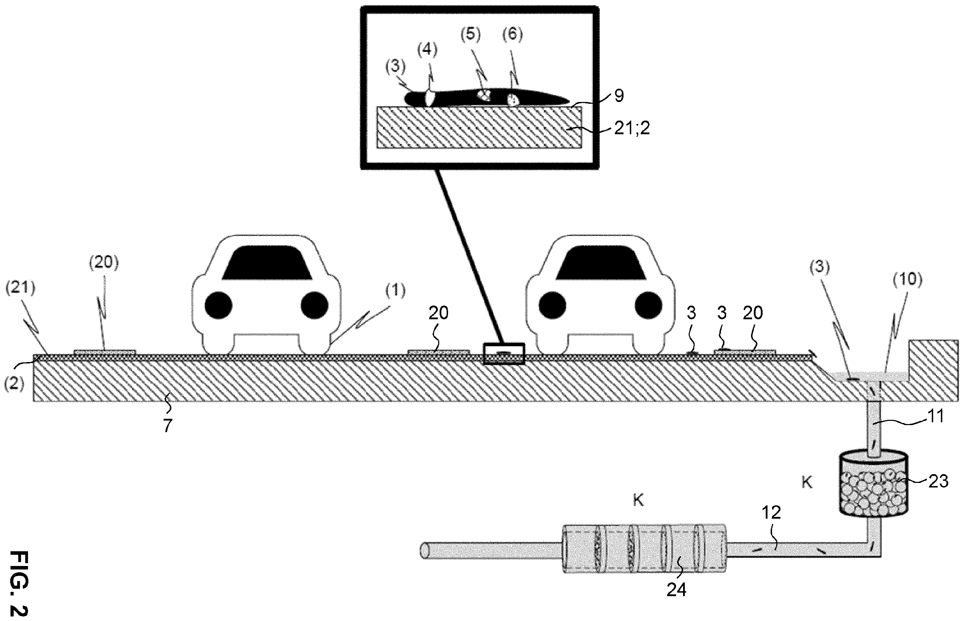

Figur 2 zeigt ebenfalls eine Fahrbahn 7 umfassend einen Fahrbahnbelag 2, auf welchem mehrere Sammlungsvorrichtungen 20 angeordnet sind. Im Gegensatz zu Figur 1 besteht der Fahrbahnbelag 2 hier aus einer Verstärkungsvorrichtung 21, welche dazu ausgebildet ist, eine magnetische Anziehbarkeit des Reifenabriebs 3 zu verstärken. Im gezeigten Beispiel handelt es sich bei der Verstärkungsvorrichtung 21 beziehungsweise beim Fahrbahnbelag 2 um Asphalt, in welchem magnetisierbares Material wie Ferrosiliziumstaub eingebettet wurde. Die Verstärkungsvorrichtung 2; 21 ist also ebenfalls nicht-fahrzeuggebunden. Die Sammlungsvorrichtungen 20 sind hier bereichsweise auf einer Oberfläche 9 der Verstärkungsvorrichtung 21, also in direktem Kontakt mit der Verstärkungsvorrichtung 21, angeordnet und liegen in Form von magnetischen Anstrichen vor. Insbesondere bilden die magnetischen Anstriche 20 hier Fahrbahnstreifenmarkierungen. Sowohl bei der Verstärkungsvorrichtung 21 als auch bei den Sammlungsvorrichtungen 20 handelt es sich hierbei um unverschiebbar angeordnete Komponenten. Dadurch, dass die Verstärkungsvorrichtung 21 den Fahrbahnbelag 2 bildet, kommt die Verstärkungsvorrichtung 21 in Kontakt mit Fahrzeugen. Bei der Befahrung durch die Fahrzeuge wird die Verstärkungsvorrichtung 21 zumindest teilweise abgetragen und bildet Fahrbahnabrieb umfassend magnetisierbares Material. Weiter wird dieser Fahrbahnabrieb zu dem sich bereits auf der Strasse befindlichen magnetisch anziehbaren

Material wie z.B. Eisenrost in die sich bildenden Partikel aus Reifenabrieb 3 eingebettet. Dadurch entstehen Reifenabrieb-Partikel 3 mit einer besonders stark ausgeprägten Magnetisierbarkeit. Nebst den Sammlungsvorrichtungen 20 in Form der magnetischen Anstriche ist in diesem Beispiel eine weitere Sammlungsvorrichtung 23 in Form eines Permanentmagneten, hier eines Matrixabscheiders 23 offenbart, wobei dieser Matrixabscheider 23 unterhalb der Fahrbahn 7 und über einen Fluidkanal 11 in Fluidverbindung mit einem Wasserabfluss 10 respektive einer Regenrinne steht. Reifenabrieb 3, welcher beispielsweise durch Wind oder Wasser in den Wasserabfluss 10 befördert wurde, gelangt von dort über das Wasser zum Matrixabscheider 23, wobei zumindest ein Teil des Reifenabriebs 3 vom Matrixabscheider 23 angezogen und an diesem gesammelt wird. Im vorliegenden Beispiel ist eine weitere Sammlungsvorrichtung 24 flussabwärts von der Sammlungsvorrichtung in Form des Matrixabscheiders 23 angeordnet, wobei es sich bei dieser weiteren Sammlungsvorrichtung 24 um einen Rohrabscheider handelt, welcher über einen weiteren Fluidkanal 12 in Fluidverbindung mit dem Matrixabscheider 23 steht. Über diesen weiteren Fluidkanal 12 fliesst das Wasser vom Matrixabscheider 23 zum Rohrabscheider 24, wobei der Rohrabscheider Reifenabrieb 3, welcher vom Matrixabscheider 23 nicht gesammelt wurde, sammelt. Das Wasser, welches den Rohrabscheider 24 verlässt, ist somit im Wesentlichen frei von Reifenabrieb 3. Die Sammlungsvorrichtungen in Form des Matrixabscheiders 23 und des Rohrabscheiders 24 werden hierin auch als Magnetabscheider K bezeichnet und führen im gezeigten Beispiel zu einer Abscheidung oder Sammlung des Reifenabriebs 3 aus Abwasser.

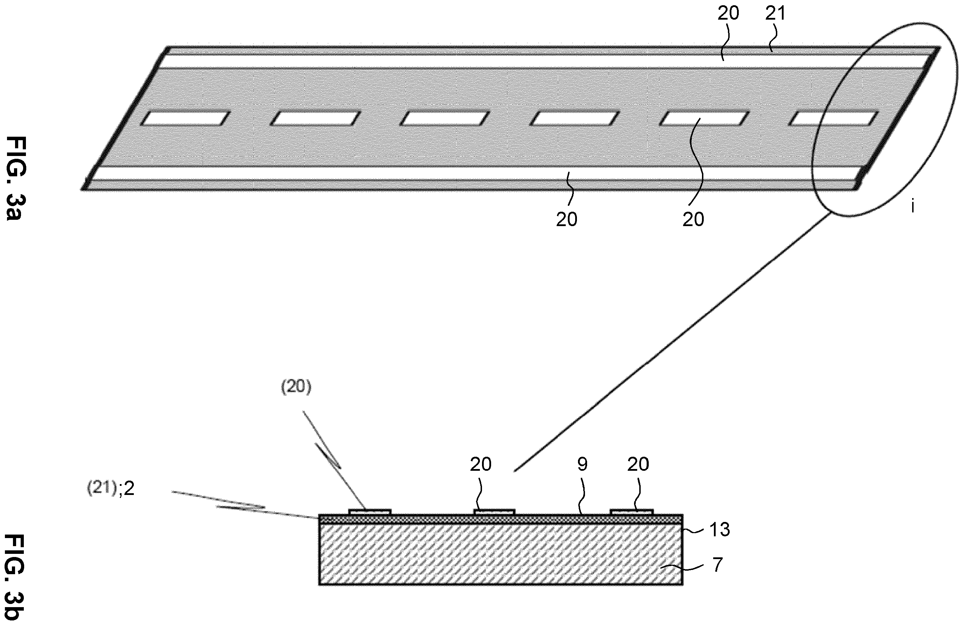

Figuren 3a und 3b zeigen weitere Aspekt einer Verstärkungsvorrichtung 21 in Form eines magnetisierbaren Fahrbahnbelags 2 sowie darauf angeordnete Sammlungsvorrichtungen 20 in Form von magnetischen Anstrichen. Wie gut aus diesen Figuren hervorgeht, erstreckt sich die Verstärkungsvorrichtung 21 vollflächig über eine gesamte Oberfläche 13 der Fahrbahn 7. Die magnetischen Anstriche 20 bilden hier Begrenzungsstreifen oder Seitenstreifenmarkierung sowie eine gestrichelte Mittellinie. Eine Dicke der Verstärkungsvorrichtung und/oder der Sammlungsvorrichtung ist vorzugsweise 15 Millimeter oder weniger. Abhängig von ihrem Verwendungszweck können die Sammlungsvorrichtungen Volumina zwischen einigen Liter bis hin zu vielen Kubikmetern einnehmen.

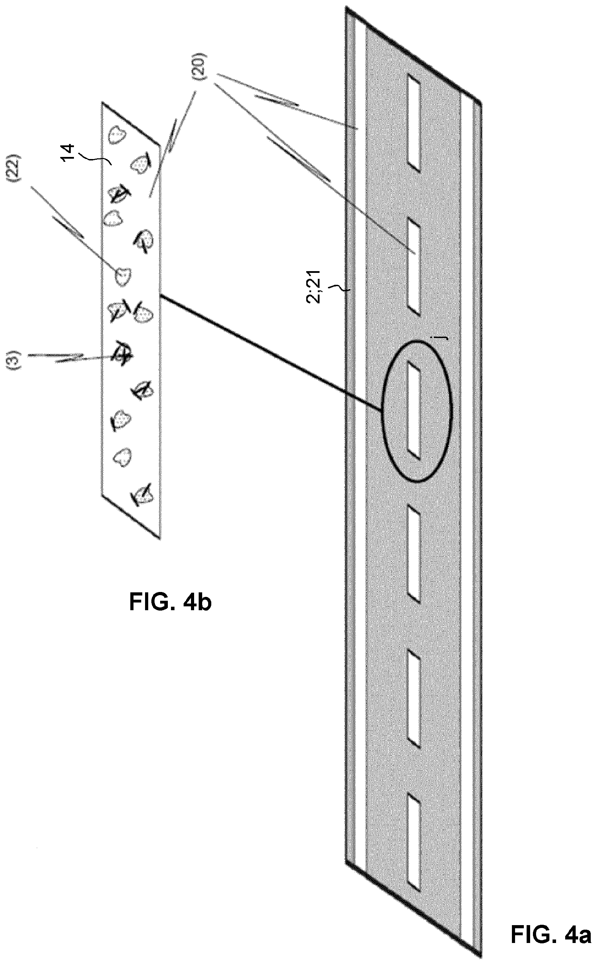

Auch die Figuren 4a und 4b zeigen Sammlungsvorrichtungen 20 in Form von magnetischen Anstrichen. Im Gegensatz zu den magnetischen Anstrichen 20 der Figuren 3a und 3b umfassen die magnetischen Anstriche 20 der Figuren 4a und 4b jedoch magnetisch anziehende Partikel 22, also Magnetpartikel, welche hier in ein Bindemittel 14 eingebettet sind.

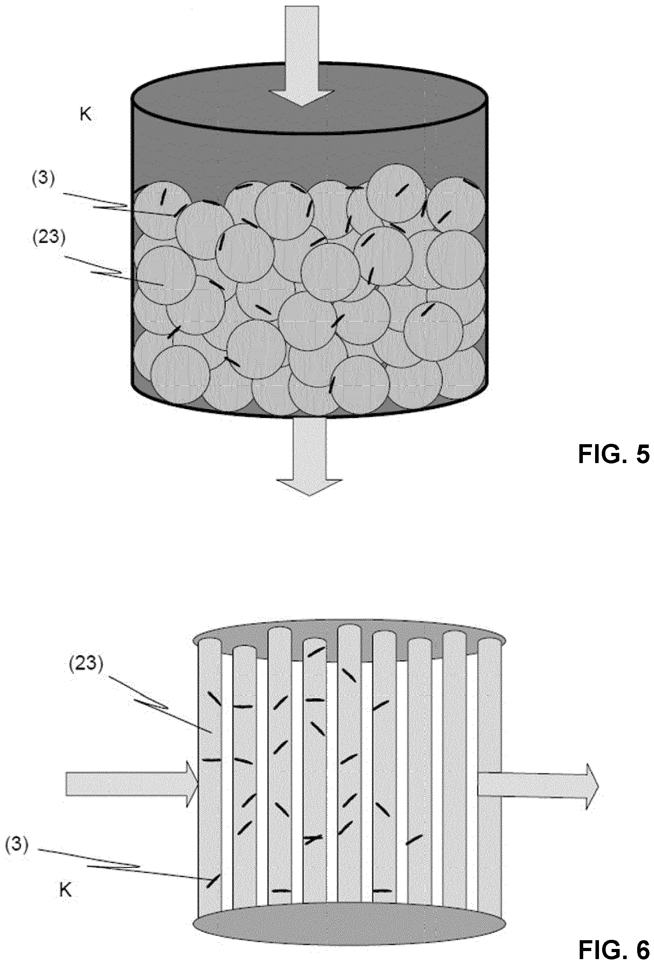

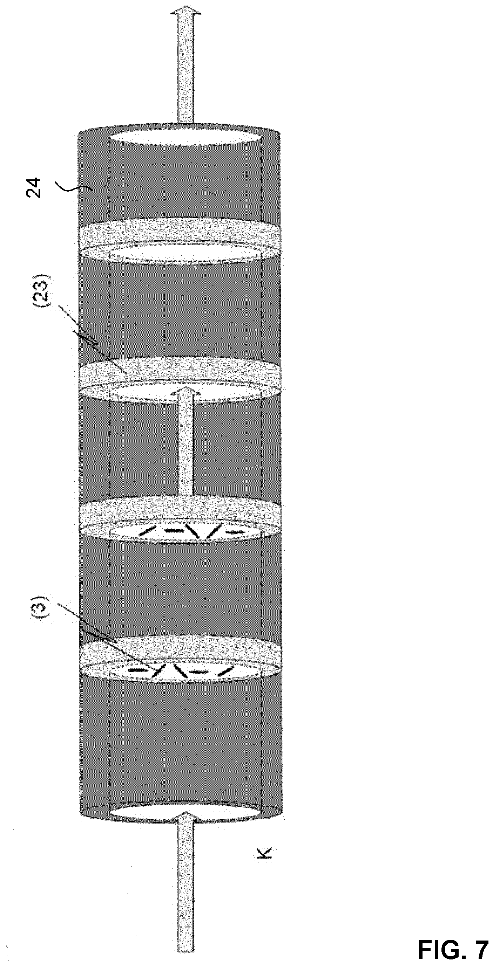

In den Figuren 5 bis 7 werden denkbare Sammlungsvorrichtungen 23, 24 in Form von Permanentmagneten dargestellt. Bei diesen Sammlungsvorrichtungen 23, 24 handelt es sich vorzugsweise um kommerziell erhältliche Sammlungsvorrichtungen, welche beispielsweise im Bereich einer Fahrbahn wie z.B. in einer sich unterhalb eines Wasserabflusses oder Regenrinne befindlichen Sickerschicht angeordnet werden können. Insbesondere zeigt die Figur 5 dabei einen Matrixabscheider 23, die Figur 6 einen Stabascheider 23, und die Figur 7 einen Rohrabscheider 24. Auch diese Sammlungsvorrichtungen können als Magnetabscheider K bezeichnet werden.

### BEZUGSZEICHENLISTE

| | | | |
|---|---|---|---|
| 1 | Reifen | 21 | Verstärkungsvorrichtung |
| 2 | Fahrbahnbelag | 22 | Magnetpartikel |
| 3 | Reifenabrieb | 23 | Magnet |
| 4 | magnetische Rostpartikel | 24 | Magnet |
| 5 | Bremsabriebpartikel | | |
| 6 | Mineralpartikel | A | Erfassung durch die |
| 7 | Fahrbahn | | Strassenreinigung |
| 8 | Sickerschicht | B | Transfer durch Wind und |
| 9 | Oberfläche | | Wasser |
| | Verstärkungsvorrichtung | C | Umwelt |
| 10 | Wasserrinne | D | Strassenabwasser |
| 11 | Fluidkanal | F | Kanalisation |
| 12 | Fluidkanal | G | Kläranlage |
| 13 | Oberfläche Fahrbahn | H | Versickerung |
| 14 | Bindemittel | K | Magnetabscheider |
| 20 | magnetische Farbe | | |

## Patentansprüche

1. Verfahren zur Sammlung von Reifenabrieb (3) umfassend die Schritte:
- Bereitstellen von mindestens einer Sammlungsvorrichtung (20; 22; 23); und
- Sammeln von Reifenabrieb (3) an der Sammlungsvorrichtung (20; 22; 23), wobei die Sammlungsvorrichtung (20; 22; 23) magnetisch anziehend ist, wobei der Reifenabrieb (3) magnetisch anziehbar ist, und
wobei die Sammlungsvorrichtung (20; 22; 23) nicht fahrzeuggebunden ist, **dadurch gekennzeichnet, dass** die Sammlungsvorrichtung (20; 22; 23) an einer Oberfläche der Sammlungsvorrichtung (20; 22; 23) eine effektive Feldstärke von mindestens 30 mT oder mehr, vorzugsweise von mindestens 100 mT oder mehr aufweist, und
wobei die Sammlungsvorrichtung (20; 22; 23) den Reifenabrieb (3) mittels einer magnetischen Anziehungskraft zwischen der Sammlungsvorrichtung (20; 22; 23) und dem Reifenabrieb (3) sammelt.

2. Verfahren gemäss einem der vorhergehenden Ansprüche, wobei die Sammlungsvorrichtung (20; 22; 23) ortsfest oder nicht-ortsfest ist.

3. Verfahren gemäss einem der vorhergehenden Ansprüche, wobei die Sammlungsvorrichtung (20; 22) auf und/oder in einer Fahrbahn (7), insbesondere einem Fahrbahnbelag (2), unverschiebbar oder verschiebbar angeordnet, vorzugsweise ausgestreut, wird, und/oder
wobei die Sammlungsvorrichtung (20; 22; 23) im Bereich einer Fahrbahn (7), insbesondere in einer Strassenabwasserbehandlungsanlage und/oder einer Leitplanke und/oder einer Sickerschicht (8) und/oder einer Befestigungsvorrichtung, unverschiebbar oder verschiebbar angeordnet, vorzugsweise ausgestreut, wird, und
wobei die Befestigungsvorrichtung vorzugsweise zur Befestigung der Sammlungsvorrichtung ausgebildet und insbesondere ein Netz ist.

4. Verfahren gemäss einem der vorhergehenden Ansprüche, wobei die Sammlungsvorrichtung (20; 22; 23) Partikel, vorzugsweise magnetisierte Partikel (22) und insbesondere bevorzugt Ferrit und/oder Magnetit, umfasst oder daraus besteht, und/oder
wobei die Sammlungsvorrichtung (20; 22; 23) magnetisierbar und/oder magnetisiert und vorzugsweise ein Permanentmagnet ist.

5. Verfahren gemäss einem der vorhergehenden Ansprüche, wobei die Sammlungsvorrichtung (20; 22) mindestens ein Bindemittel (14) und darin eingelagerte magnetisierte Partikel (22) umfasst,
wobei das Bindemittel (14) insbesondere ein Kunstharz und/oder Zement und/oder Bitumen ist oder darin enthalten ist, und/oder
wobei die magnetisierten Partikel (22) vorzugsweise unmagnetisiert dem Bindemittel (14) zugeführt und nach einer Anordnung des Bindemittels (14) umfassend die unmagnetisierten Partikel auf und/oder in einer Fahrbahn (7), insbesondere eines Fahrbahnbelags (2), und/oder im Bereich einer Fahrbahn (7), insbesondere eines Fahrbahnbelags (2), insbesondere durch Anlegen eines externen Magnetfeldes magnetisiert werden.

6. Verfahren gemäss einem der vorhergehenden Ansprüche, wobei die Sammlungsvorrichtung (20; 22; 23) an einem Ort aufweisend einen erhöhten Reibungsabrieb bereitgestellt wird, und/oder
wobei die Sammlungsvorrichtung (20; 22; 23) an einem Ort bereitgestellt wird, wo Fahrzeuge abbremsen und/oder beschleunigen und/oder Scherkräfte auf Reifen der Fahrzeuge erzeugen, und/oder
wobei die Sammlungsvorrichtung (20; 22; 23) im Bereich von Lichtzeichenanlagen und/oder Stoppschilder und/oder Kurven bereitgestellt wird.

7. Verfahren gemäss einem der vorhergehenden Ansprüche, wobei der Reifenabrieb (3) durch mindestens ein Fluid, insbesondere durch Luftbewegung und/oder durch Wasser (10), vorzugsweise Regenwasser, zur Sammlungsvorrichtung (20; 22; 23) geführt wird.

8. Verfahren gemäss einem der vorhergehenden Ansprüche, weiter umfassend das Bereitstellen von mindestens einer Verstärkungsvorrichtung (21), wobei die Verstärkungsvorrichtung (21) dazu ausgebildet ist, eine magnetische Anziehbarkeit des Reifenabriebs (3) zu verstärken.

9. Verfahren gemäss Anspruch 8, wobei die Verstärkungsvorrichtung (21) magnetisch anziehbares Material, insbesondere magnetisierbares Material, bevorzugt Ferrosiliziumstaub, umfasst oder daraus besteht, und/oder
wobei die Verstärkungsvorrichtung (21) partikelförmig ist und insbesondere Partikel in einer Grösse in einem Bereich von 0.005 Millimeter bis 4 Millimeter, bevorzugter in einem Bereich von 0.01 Millimeter bis 2 Millimeter umfasst oder daraus besteht.

10. Verfahren gemäss Anspruch 8 oder 9, wobei die Verstärkungsvorrichtung (21) nicht-fahrzeuggebunden, und insbesondere ortsfest oder nicht-ortsfest ist.

11. Verfahren gemäss einem der Ansprüche 8 bis 10, wobei die Verstärkungsvorrichtung (21) in und/oder auf einer Fahrbahn (7), insbesondere einem Fahrbahnbelag (2), bereitgestellt wird, und/oder
wobei die Verstärkungsvorrichtung (21) im Bereich der Sammlungsvorrichtung (20; 22; 23) bereitgestellt wird, und/oder
wobei die Verstärkungsvorrichtung (21) dazu ausgebildet ist, bei einer Befahrung von einem Fahrzeug einen vorzugsweise magnetisch anziehenden Fahrbahnabrieb zu bilden, und/oder
wobei die Verstärkungsvorrichtung (21) für eine Einbettung in den Reifenabrieb (3), insbesondere in sich bildende Partikel aus Reifenabrieb (3), ausgebildet ist.

12. Verfahren gemäss einem der vorhergehenden Ansprüche, weiter umfassend das Klassieren des Reifenabriebs (3) basierend auf einer Korngrösse des Reifenabriebs (3), und
wobei der Reifenabrieb (3) vorzugsweise in eine Korngrösse von 2 Millimeter oder weniger, vorzugsweise von 1 Millimeter oder weniger klassiert wird, und/oder
wobei das Klassieren vorzugsweise vor einer Zuführung des Reifabriebs zur Sammlungsvorrichtung (20; 22; 23) erfolgt.

13. Verfahren gemäss einem der vorhergehenden Ansprüche, weiter umfassend das Entfernen des an der Sammlungsvorrichtung (20; 22; 23) gesammelten Reifenabriebs (3),
wobei das Entfernen vorzugsweise durch eine Strassenreinigung und/oder durch eine Abreinigung und/oder durch eine Sammlung insbesondere gemeinsam mit der Sammlungsvorrichtung (22) erfolgt.

14. Sammlungsvorrichtung (20; 22; 23) zur Sammlung von Reifenabrieb (3), insbesondere aus Strassenstaub,
wobei der Reifenabrieb (3) magnetisch anziehbar ist,
wobei die Sammlungsvorrichtung (20; 22; 23) magnetisch anziehend ist, und
wobei die Sammlungsvorrichtung (20; 22; 23) nicht fahrzeuggebunden ist, **dadurch gekennzeichnet, dass** die Sammlungsvorrichtung (20; 22; 23) an einer Oberfläche der Sammlungsvorrichtung (20; 22; 23) eine effektive Feldstärke von mindestens 30 mT oder mehr, vorzugsweise von mindestens 100 mT oder mehr aufweist, und
wobei die Sammlungsvorrichtung (20; 22; 23) dazu ausgebildet ist, den Reifenabrieb (3) mittels einer magnetischen Anziehungskraft zwischen der Sammlungsvorrichtung (20; 22; 23) und dem Reifenabrieb (3) zu sammeln.

15. Verwendung einer Sammlungsvorrichtung (20; 22; 23) zur Sammlung von Reifenabrieb (3), insbesondere einer Sammlungsvorrichtung (20; 22; 23) gemäss einem der vorhergehenden Ansprüche,
wobei die Sammlungsvorrichtung (20; 22; 23) magnetisch anziehend ist,
wobei der Reifenabrieb (3) magnetisch anziehbar ist, und
wobei die Sammlungsvorrichtung (20; 22; 23) nicht fahrzeuggebunden ist, **dadurch gekennzeichnet, dass** die Sammlungsvorrichtung (20; 22; 23) an einer Oberfläche der Sammlungsvorrichtung (20; 22; 23) eine effektive Feldstärke von mindestens 30 mT oder mehr, vorzugsweise von mindestens 100 mT oder mehr aufweist, und
wobei die Sammlungsvorrichtung (20; 22; 23) den Reifenabrieb (3) mittels einer magnetischen Anziehungskraft zwischen der Sammlungsvorrichtung (20; 22; 23) und dem Reifenabrieb (3) sammelt.

## Claims

1. A method for collecting tire wear (3) comprising the steps of:
- Providing at least one collecting device (20; 22; 23); and
- Collecting tire wear (3) at the collecting device (20; 22; 23),
wherein the collecting device (20; 22; 23) is magnetically attractive,
wherein the tire wear (3) is magnetically attractable, and
wherein the collecting device (20; 22; 23) is not vehicle-bound,
**characterized in that** the collecting device (20; 22; 23) has an effective field strength of at least 30 mT or more, preferably of at least 100 mT or more, at a surface of the collecting device (20; 22; 23), and
wherein the collecting device (20; 22; 23) collects the tire wear (3) by means of a magnetic attraction force between the collecting device (20; 22; 23) and the tire wear (3).

2. The method according to any one of the preceding claims, wherein the collecting device (20; 22; 23) is stationary or nonstationary.

3. The method according to any one of the preceding claims, wherein the collecting device (20; 22) is arranged, preferably scattered, on and/or in a roadway (7), in particular a roadway surface (2), in a non-displaceable or displaceable manner, and/or
wherein the collecting device (20; 22; 23) is arranged, preferably scattered, in a non-displaceable or displaceable manner in the region of a roadway (7), in particular in a roadway waste water treatment system and/or a crash barrier and/or a seepage layer (8) and/or a fastening device, and
wherein the fastening device is preferably configured for fastening the collecting device and is in particular a net.

4. The method according to any one of the preceding claims, wherein the collecting device (20; 22; 23) comprises or consists of particles, preferably magnetized particles (22) and particularly preferably ferrite and/or magnetite, and/or
wherein the collecting device (20; 22; 23) is magnetizable and/or magnetized and preferably is a permanent magnet.

5. The method according to any one of the preceding claims, wherein the collecting device (20; 22) comprises at least one binding agent (14) and magnetized particles (22) embedded therein,
wherein the binding agent (14) is in particular a synthetic resin and/or cement and/or bitumen or is contained therein, and/or
wherein the magnetized particles (22) are preferably supplied to the binding agent (14) in a non-magnetized state and, after an arrangement of the binding agent (14) comprising the non-magnetized particles on and/or in a roadway (7), in particular a roadway surface (2), and/or in the region of a roadway (7), in particular a roadway surface (2), are magnetized in particular by applying an external magnetic field.

6. The method according to any one of the preceding claims, wherein the collecting device (20; 22; 23) is provided at a location having an increased frictional wear, and/or
wherein the collecting device (20; 22; 23) is provided at a location where vehicles decelerate and/or accelerate and/or generate shear forces on tires of the vehicles, and/or
wherein the collecting device (20; 22; 23) is provided in the area of traffic lights and/or stop signs and/or curves.

7. The method according to any one of the preceding claims, wherein the tire wear (3) is guided to the collecting device (20; 22; 23) by at least one fluid, in particular by air movement and/or by water (10), preferably rainwater.

8. The method according to any one of the preceding claims, further comprising providing at least one reinforcing device (21), wherein the reinforcing device (21) is adapted to reinforce a magnetic attractability of the tire wear (3).

9. The method according to claim 8, wherein the reinforcing device (21) comprises or consists of magnetically attractable material, in particular magnetizable material, preferably ferrosilicon dust, and/or
wherein the reinforcing device (21) is particulate and in particular comprises or consists of particles having a size in a range from 0.005 millimeters to 4 millimeters, more preferably in a range from 0.01 millimeters to 2 millimeters.

10. The method according to claim 8 or 9, wherein the reinforcing device (21) is not vehicle-bound, and in particular is stationary or nonstationary.

11. The method according to any one of claims 8 to 10, wherein the reinforcing device (21) is provided in and/or on a roadway (7), in particular a roadway surface (2), and/or
wherein the reinforcing device (21) is provided in the region of the collecting device (20; 22; 23), and/or
wherein the reinforcing device (21) is designed to form a preferably magnetically attracting roadway wear when a vehicle drives over it, and/or
wherein the reinforcing device (21) is configured for embedding in the tire wear (3), in particular in particles formed from tire wear (3).

12. The method according to any one of the preceding claims, further comprising classifying the tire wear (3) based on a grain size of the tire wear (3), and
wherein the tire wear (3) is preferably classified into a grain size of 2 millimeters or less, preferably 1 millimeter or less, and/or
wherein the classifying preferably takes place before the tire wear is fed to the collecting device (20; 22; 23).

13. The method according to any one of the preceding claims, further comprising removing the tire wear (3) collected at the collecting device (20; 22; 23),
wherein the removal is preferably carried out by street cleaning and/or by cleaning and/or by collection, in particular together with the collecting device (22).

14. A collecting device (20; 22; 23) for collecting tire wear (3), in particular from roadway dust,
wherein the tire wear (3) is magnetically attractable,
wherein the collecting device (20; 22; 23) is magnetically attractive, and
wherein the collecting device (20; 22; 23) is not vehicle-bound,
**characterized in that** the collecting device (20; 22; 23) has an effective field strength of at least 30 mT or more, preferably of at least 100 mT or more, at a surface of the collecting device (20; 22; 23), and
wherein the collecting device (20; 22; 23) is configured to collect the tire wear (3) by means of a magnetic attraction force between the collecting device (20; 22; 23) and the tire wear (3).

15. Use of a collecting device (20; 22; 23) for collecting tire wear (3), in particular a collecting device (20; 22; 23) according to any one of the preceding claims,
wherein the collecting device (20; 22; 23) is magnetically attractive,
wherein the tire wear (3) is magnetically attractable, and
wherein the collecting device (20; 22; 23) is not vehicle-bound,
**characterized in that** the collecting device (20; 22; 23) has an effective field strength of at least 30 mT or more, preferably of at least 100 mT or more, at a surface of the collecting device (20; 22; 23), and
wherein the collecting device (20; 22; 23) collects the tire wear (3) by means of a magnetic attraction force between the collecting device (20; 22; 23) and the tire wear (3).

## Revendications

1. Un procédé de collecte d'usure de pneumatiques (3) comprenant les étapes :
- fournir au moins un dispositif de collecte (20 ; 22 ; 23) ; et
- collecter l'usure de pneumatiques (3) sur le dispositif de collecte (20 ; 22 ; 23),
dans lequel le dispositif de collecte (20 ; 22 ; 23) est magnétiquement attractif,
dans lequel l'usure de pneumatiques (3) peut être attirée magnétiquement,
dans lequel le dispositif de collecte (20 ; 22 ; 23) n'est pas relié au véhicule,
**caractérisé en ce que** le dispositif de collecte (20 ; 22 ; 23), au niveau d'une surface du dispositif de collecte (20 ; 22 ; 23), présente une intensité de champ magnétique effective d'au moins 30 mT ou plus, de préférence d'au moins 100 mT ou plus,
et
dans lequel le dispositif de collecte (20 ; 22 ; 23) collecte l'usure de pneumatiques (3) au moyen d'une force d'attraction magnétique entre le dispositif de collecte (20 ; 22 ; 23) et l'usure de pneumatiques (3).

2. Le procédé selon l'une des revendications précédentes, dans lequel le dispositif de collecte (20 ; 22 ; 23) est fixe ou non.

3. Le procédé selon l'une des revendications précédentes, dans lequel le dispositif de collecte (20 ; 22) est de préférence étalé sur et/ou dans une chaussée (7), en particulier le recouvrement d'une chaussée (2), disposé de manière fixe ou déplaçable, et/ u
dans lequel le dispositif de collecte (20 ; 22 ; 23) est disposé de manière fixe ou déplaçable, de préférence étalé, dans la zone d'une chaussée (7), en particulier dans une station d'épuration des eaux usées routières et/ou une barrière de sécurité et/ou une couche d'infiltration (8) et/ou un dispositif de fixation, et
dans lequel le dispositif de fixation est de préférence destiné à fixer le dispositif de collecte et est notamment un filet.

4. Le procédé selon l'une des revendications précédentes, dans lequel le dispositif collecteur (20 ; 22 ; 23) comprend ou est constitué de particules, de préférence des particules magnétisées (22) et de manière particulièrement préférée de la ferrite et/ou de la magnétite, et/ou dans lequel le dispositif collecteur (20 ; 22 ; 23) peut être magnétisé et/ou est magnétisé et est de préférence un aimant permanent.

5. Le procédé selon l'une des revendications précédentes, dans lequel le dispositif de collecte (20 ; 22) comprend au moins un liant (14) et des particules magnétisées (22) y sont incorporées,
dans lequel le liant (14) est ou contient notamment une résine synthétique et/ou du ciment et/ou du bitume, et/ou
dans lequel les particules magnétisées (22) sont de préférence incorporées dans un état non magnétisé au liant (14) et, après avoir disposé le liant (14) comprenant les particules non magnétisées sur et/ou dans une chaussée (7), en particulier un recouvrement de chaussée (2), et/ou dans la zone d'une chaussée (7), en particulier d'un recouvrement de chaussée (2), peut être magnétisée, notamment par application d'un champ magnétique externe.

6. Le procédé selon l'une des revendications précédentes, dans lequel le dispositif de collecte (20 ; 22 ; 23) est prévu à un endroit présentant une usure par friction accrue, et/ou
dans lequel le dispositif de collecte (20 ; 22 ; 23) est prévu à un emplacement où les véhicules freinent et/ou accélèrent et/ou génèrent des forces de cisaillement sur les pneus des véhicules, et/ou
le dispositif de collecte (20 ; 22 ; 23) étant prévu dans la zone des feux de circulation et/ou des panneaux d'arrêt et/ou des virages.

7. Le procédé selon l'une des revendications précédentes, dans lequel l'usure de pneumatiques (3) est guidée vers le dispositif de collecte (20 ; 22 ; 23) par au moins un fluide, notamment par le mouvement de l'air et/ou par l'eau (10), de préférence eau de pluie.

8. Le procédé selon l'une des revendications précédentes, comprenant en outre la fourniture d'au moins un dispositif de renforcement (21), le dispositif de renforcement (21) étant conçu pour augmenter l'attractivité magnétique de l'usure de pneumatique (3).

9. Procédé selon la revendication 8, dans lequel le dispositif de renforcement (21) comprend ou est constitué d'un matériau pouvant être attiré magnétiquement, en particulier d'un matériau magnétisable, de préférence de la poussière de ferrosilicium, et/ou dans lequel le dispositif de renforcement (21) comporte de particules et en particulier de particules d'une taille en une plage de 0,005 millimètres à 4 millimètres, de préférence dans une plage de 0,01 millimètres à 2 millimètres ou est constitué de celles-ci.

10. Le procédé selon la revendication 8 ou 9, dans lequel le dispositif de renforcement (21) n'est pas lié au véhicule, et est en particulier fixe ou non fixe.

11. Le procédé selon l'une des revendications 8 à 10, dans lequel le dispositif de renforcement (21) est prévu dans et/ou sur une chaussée (7), en particulier un recouvrement de chaussée (2), et/ou
dans lequel le dispositif de renforcement (21) est prévu dans la zone du dispositif de collecte (20 ; 22 ; 23), et/ou
dans lequel le dispositif de renforcement (21) est conçu pour former une usure de pneumatiques de préférence magnétiquement attractive lorsqu'un véhicule circule dessus, et/ou
dans lequel le dispositif de renforcement (21) est conçu pour être noyé dans l'usure de pneumatiques (3), notamment dans des particules d'usure de pneumatiques (3).

12. Le procédé selon l'une des revendications précédentes, comprenant en outre la classification de l'usure de pneumatiques (3) sur la base d'une granulométrie de l'usure de pneumatiques (3), et
dans lequel l'usure de pneumatiques (3) est de préférence classée en une granulométrie de 2 millimètres ou moins, de préférence de 1 millimètre ou moins, et/ou
la classification ayant lieu de préférence avant que l'usure de pneumatiques ne soit introduite dans le dispositif de collecte (20 ; 22 ; 23).

13. Le procédé selon l'une des revendications précédentes, comprenant en outre le retrait de l'usure de pneumatiques (3) collectée sur le dispositif de collecte (20 ; 22 ; 23), le retrait étant effectué de préférence par nettoyage des chaussées et/ou par nettoyage et/ou par collecte, en particulier avec le dispositif de collecte (22).

14. Un dispositif de collecte (20 ; 22 ; 23) pour collecter les usures de pneumatiques (3), en particulier celles provenant de la poussière de route,
dans lequel le dispositif de collecte (20 ; 22 ; 23) est magnétiquement attractif,
dans lequel l'usure de pneumatiques (3) peut être attirée magnétiquement,
dans lequel le dispositif de collecte (20 ; 22 ; 23) n'est pas relié au véhicule,
**caractérisé en ce que** le dispositif de collecte (20 ; 22 ; 23) n'est pas relié au véhicule, **caractérisé en ce que** le dispositif de collecte (20 ; 22 ; 23), au niveau d'une surface du dispositif de collecte (20 ; 22 ; 23), présente une intensité de champ magnétique effective d'au moins 30 mT ou plus, de préférence d'au moins 100 mT ou plus,
et
dans lequel le dispositif de collecte (20 ; 22 ; 23) est conçu pour collecter l'usure de pneumatiques (3) au moyen d'une force d'attraction magnétique entre le dispositif de collecte (20 ; 22 ; 23) et l'usure de pneumatiques (3).

15. Utilisation d'un dispositif de collecte (20 ; 22 ; 23) pour collecter l'usure de pneumatiques (3), en particulier d'un dispositif de collecte (20 ; 22 ; 23) selon l'une des revendications précédentes,
dans lequel le dispositif de collecte (20 ; 22 ; 23) est magnétiquement attractif,
dans lequel l'usure de pneumatiques (3) peut être attirée magnétiquement,
dans lequel le dispositif de collecte (20 ; 22 ; 23) n'est pas relié au véhicule,
**caractérisé en ce que** le dispositif de collecte (20 ; 22 ; 23) n'est pas relié au véhicule,
**caractérisé en ce que** le dispositif de collecte (20 ; 22 ; 23), au niveau d'une surface du dispositif de collecte (20 ; 22 ; 23), présente une intensité de champ magnétique effective d'au moins 30 mT ou plus, de préférence d'au moins 100 mT ou plus,
et
dans lequel le dispositif de collecte (20 ; 22 ; 23) est conçu pour collecter l'usure de pneumatiques (3) au moyen d'une force d'attraction magnétique entre le dispositif de collecte (20 ; 22 ; 23) et l'usure de pneumatiques (3).
